# EUROPEAN PATENT SPECIFICATION

(11) **EP 1 396 799 B1**
(45) Date of publication and mention of the grant of the patent: **23.04.2008**
(21) Application number: 02733381.4
(22) Date of filing: 07.06.2002
(51) Int. Cl.: G06F 17/30

(54) **CONTENT MANAGEMENT SYSTEM**
INHALTSVERWALTUNGSSYSTEM
SYSTEME DE GESTION DE CONTENUS

(30) Priority: 11.06.2001 JP 2001175136
(43) Date of publication of application: 10.03.2004
(73) Proprietor: MATSUSHITA ELECTRIC INDUSTRIAL CO., LTD, Kadoma-shi, Osaka 571-8501 (JP)
(72) Inventor: SHIMOJIMA, Takashi, Ota-ku, Tokyo 144-0046 (JP); NOGUCHI, Naohiko, Yokohama-shi, Kanagawa 222-0031 (JP)
(74) Representative: Grünecker, Kinkeldey, Stockmair & Schwanhäusser Anwaltssozietät
(86) International application number: PCT/JP2002/005646
(87) International publication number: WO 2002/101588

(56) References cited:
- JP-A- 5 204 990
- JP-A- 11 155 122
- JP-A- 2000 235 585
- JP-A- 2001 101 195
- Y. WATANABE, Y. OKADA, K. KANEJI, Y. SAKAMOTO: "Multimedia Database System for TV Newscasts and Newspapers" ADVANCED MULTIMEDIA CONTENT PROCESSING, FIRST INTERNATIONAL CONFERENCE AMCP'98, [Online] vol. 1554/1999, November 1998 (1998-11), pages 208-220, XP002402824 Osaka, Japan ISSN: 0302-9743 Retrieved from the Internet: URL:http://www.springerlink.com/content/q5 yeq9mv6nph1pyq/> [retrieved on 2006-10-12]
- YASUHIKO WATANABE, YOSHIHIRO OKADA, KENGO KANEJI, MAKOTO NAGAO: "Aligning articles in TV newscasts and newspapers" PROCEEDINGS OF THE 17TH INTERNATIONAL CONFERENCE ON COMPUTATIONAL LINGUISTICS, [Online] 1998, pages 1381-1387, XP002402825 Montreal, Quebec, CANADA Retrieved from the Internet: URL:http://portal.acm.org/citation.cfm?id= 980794> [retrieved on 2006-10-12]
- SODERGARD C ET AL: "Integrated multimedia publishing: combining TV and newspaper content on personal channels" COMPUTER NETWORKS, ELSEVIER SCIENCE PUBLISHERS B.V., AMSTERDAM, NL, vol. 31, no. 11-16, 17 May 1999 (1999-05-17), pages 1111-1128, XP004304543 ISSN: 1389-1286
- ARIKI Y ET AL: "Automatic classification of TV news articles based on telop character recognition" MULTIMEDIA COMPUTING AND SYSTEMS, 1999. IEEE INTERNATIONAL CONFERENCE ON FLORENCE, ITALY 7-11 JUNE 1999, LOS ALAMITOS, CA, USA,IEEE COMPUT. SOC, US, vol. 2, 7 June 1999 (1999-06-07), pages 148-152, XP010519373 ISBN: 0-7695-0253-9
- WATANABE ET AL.: 'TV news to shinbun kiji no taiozuke' JOURNAL OF JAPANESE SOCIETY FOR ARTIFICIAL INTELLIGENCE vol. 12, no. 6, 01 November 1997, pages 921 - 927, XP002958991
- TSUNODA ET AL.: 'Caption to kiji text no saicho icchi mojiretsu shogo ni yoru hodo bangumi to shinbun kiji to no taiozuke no jidoka' INFORMATION PROCESSING SOCIETY OF JAPAN, KENKYU HOKOKU vol. 96, no. 87(98-NL-115-11), 13 September 1996, pages 75 - 82, XP002958994
- IDE ET AL.: 'News eizochu no fukusu text johogen kara no juyogo chushutsu' INFORMATION PROCESSING SOCIETY OF JAPAN, DAI-61-KAI (HEISEI 12-NEN KOKI) ZENKOKU TAIKAI KOEN RONBUNSHU vol. 3, no. 1P-1, 03 October 2000, pages 3-99 - 3-100, XP002958995
- KONDO ET AL.: 'Telop ninshiki to kaoshogo o togo-shita news eizochu jinbutsu no jido sakuinzuke system' THE INSTITUTE OF ELECTRONICS, INFORMATION AND COMMUNICATION ENGINEERS, 1999-NEN SOGO TAIKAI KOEN RONBUNSHU vol. 2, no. D-12-190, 08 March 1999, page 363, XP002958996
- ABE ET AL.: 'Bunsho joho o kaizaisaseta eizo joho bunmyaku henshu gijutsu' JAPANESE SOCIETY FOR ARTIFICIAL INTELLIGENT, KENKYUKAI SHIRYO no. SIG-J-9702-6, 04 December 1997, pages 33 - 38, XP002958997
- NAOHIKO URAMOTO: 'Shinbun kiji no kanrenzuke to ka-shika no tame no isshuho' INFORMATION PROCESSING SOCIETY OF JAPAN, DAI 53-KAI (HEISEI 8-NEN KOKI) ZENKOKU TAIKAI KOEN RONBUNSHU vol. 3, no. 1S-3, 06 September 1996, pages 3-101 - 3-102, XP002958998
- HAIZUKA ET AL.: 'Scenario ni motozuku eizo kensaku hoho' THE INSTITUTE OF ELECTRONICS, INFORMATION AND COMMUNICATION ENGINEERS, GIJUTSU KENKYU HOKOKUSHO vol. 96, no. 499(HIP96-35), 24 January 1997, pages 61 - 66, XP002958999
- UEHARA ET AL.: 'Story o koryoshita video no naiyo kijutsu model' TRANSACTIONS OF INFORMATION PROCESSING SOCIETY OF JAPAN vol. 39, no. 4, 15 April 1998, pages 943 - 953, XP002959000
- MIURA ET AL.: 'Scenario o mochiita drama no scene kensaku system' INFORMATION PROCESSING SOCIETY OF JAPAN, KENKYU HOKOKU vol. 98, no. 48(98-NL-125-5), 29 May 1998, pages 55 - 62, XP002960201
- AKASAKO ET AL.: 'Eizo no real time authoring o shiensuru data base kino ni tsuite' INFORMATION PROCESSING SOCIETY OF JAPAN, DAI-57-KAI (HEISEI 10-NEN KOKI) ZENKOKU TAIKAI KOEN RONBUNSHU vol. 2, no. 3K-2, 07 October 1998, pages 3-33 - 3-34, XP002960202
- MIURA ET AL.: 'Scenario o mochiita drama no scene kensaku system' TRANSACTIONS OF INFORMATION PROCESSING SOCIETY OF JAPAN vol. 40, no. SIG3(TOD1), 15 February 1999, pages 144 - 151, XP002960203
- HAMADA ET AL.: 'Ryori bangumi ni okeru eizo to text joho no taiozuke' INFORMATION PROCESSING SOCIETY OF JAPAN, DAI-58-KAI (HEISEI 11-NEN ZENKI) ZENKOKU TAIKAI KOEN RONBUNSHU vol. 3, no. 4U-7, 11 March 1999, pages 3-191 - 3-192, XP002960204
- UEDA ET AL.: 'Scenario template ni yoru story-sei o jushishita digest seisei kiko' INFORMATION PROCESSING SOCIETY OF JAPAN, KENKYU HOKOKU vol. 99, no. 61(99-DBS-119-24), 22 July 1999, pages 139 - 144, XP002960205
- MIURA ET AL.: 'Ryori eizo no kozo kaiseki ni yoru tejun to no taiozuke' INFORMATION PROCESSING SOCIETY OF JAPAN, DAI-62-KAI (HEISEI 13-NEN KOKI) ZENKOKU TAIKAI KOEN RONBUNSHU vol. 3, no. 6R-9, 13 March 2001, pages 3-31 - 3-32, XP002960206
- SATO ET AL.: 'Live hypermedia ni okeru eizo joho no kakutoku' THE TRANSACTIONS OF THE INSTITUTE OF ELECTRONICS, INFORMATION AND COMMUNICATION ENGINEERS vol. J79-D-II, no. 4, 25 April 1996, pages 559 - 567, XP002960207

## Description

### Technical Field

The present invention relates to assignment of metadata to non-text content such as video and audio in a computer system that manages multimedia content.

### Background Art

The widespread of the internet allows us to get access to various kinds of content. Further, in recent years, broadband communication networks using techniques such as ADSL (Asymmetric Digital Subscriber Line) and FTTH (Fiber To The Home) have provided environments enabling the comfortable use of multimedia information such as video and audio as well as content primarily including text and/or images with a relatively small data size, and the provision of further various kinds of content is expected in the future.

Thus, in proportion to increases in usable content, techniques become more important such as retrieval of desirable content and filtering for eliminating unnecessary content. In particular, the multimedia content such as video and audio is distinct from text-based content, and does not become a target for retrieval and filtering unless processed.

Then, in order to perform such retrieval and/or filtering, metadata is necessary that describes characteristics of the content, techniques for which are required. With respect to metadata for describing the subject meaning of content, a variety of studies have been performed on text-based content. For example, Tipster project organized by American Government recommends techniques regarding text processing, where techniques of extracting information from text are studied and developed (for the Tipster project, see Junichi Fukumoto, Satoshi Sekine, and Yoshio Eriguchi, "Reports on the MUC-7 and Tipster 18-month Meeting", Information Processing Society, Natural Language Processing, 127-14, 1998).

Meanwhile, an example of framework of metadata for non-text based content such as video and audio includes MPEG-7 ("Multimedia Content Description Interface", [ISO/IEC 15938]). MPEG-7 is a global standard that specifies descriptors to describe the content of multimedia information, and intends to implement retrieval and filtering based on the subject meaning of multimedia content using the description.

However, in the case of non-text based content such as video and audio targeted for assignment of metadata in MPEG-7, such a technique does not exist that automatically extracts metadata which indicates, for example, the information of news with respect to a time zone of the content of news program, and currently the metadata is assigned manually.

For example, a multimedia database system for newspapers and TV newscasts that establishes a cross-reference of TV news articles with newspaper articles for allowing the user to consult articles in TV newscast and newspapers by using a www browser is described by WATANABE, Y. et al. in "Multimedia Database System for TV Newscasts and Newspapers" ADVANCED MULTIMEDIA CONTENT PROCESSING, FIRST INTERNATIONAL CONFERENCE AMCP'98, [Online] vol. 1554/1999, November 1998 (1998-11), pages 208-220, XP002402824 Osaka, Japan. The alignment method lies in the extraction of nouns from text information (telops) appearing in TV images by hand and the extracted texts are segmented by a morphological analyzer. The telops are analyzed based on the kind of information they refer to and nouns are extracted only from the kinds of telops considered to contain adequate words to be used in the alignment process.

The alignment process consists in calculating the reliability score for an article in the TV newscast with each article in the corresponding newspaper and then selecting the newspaper article with the maximum reliability score as the corresponding one.

Since thus manually assigning metadata is an inefficient method with enormous time and efforts required, content providers cannot assign various kinds of metadata to non-text based content in terms of cost.

Further, since the manually assigned metadata is not of various kinds, it is not possible to retrieve another related-news video content with high accuracy.

### Disclosure of Invention

It is an object of the present invention to provide a content managing system capable of assigning a wider variety of metadata to non-text based content based on metadata regarding the subject meaning that is at least manually assigned to the non-text based content, and of deriving the relation in subject to pieces of non-text based content.

This object is solved by the invention as claimed in the independent claims. Preferred embodiments of the invention are defined by the dependent claims.

### Brief Description of Drawings

FIG.1 is a block diagram illustrating a content managing system in Embodiment 1 of the present invention;
FIG.2 is a view showing an example of non-text based content and metadata of the content in Embodiment 1 of the present invention;
FIG.3 is a view showing an example of text-based content and metadata of the content in Embodiment 1 of the present invention;
FIG.4 is a flow diagram illustrating a processing flow for adding metadata with respect to non-text based content in Embodiment 1 of the present invention;
FIG. 5 is a view showing an example of metadata added, in the stage where the processing for adding metadata is finished on news item 211 in Embodiment 1 of the present invention;
FIG. 6 is a collective view showing the relationship between content and metadata in the processing for adding metadata with respect to the non-text based content in Embodiment 1 of the present invention;
FIG.7 is a block diagram illustrating a content managing system in Embodiment 2 of the present invention;
FIG.8 is a view showing an example of non-text based content and metadata of the content in Embodiment 2 of the present invention;
FIG.9 is a view showing an example of text-based content and metadata of the content in Embodiment 2 of the present invention;
FIG.10 is a view showing an example of related-content information automatically generated by related-content information generating section 721 in Embodiment 2 of the present invention;
FIG. 11 is a flow diagram illustrating a processing flow for generating related-content information with respect to non-text based content in Embodiment 2 of the present invention;
FIG.12 is a view showing an example of related-content information stored in non-text related-content information storing section 713 in Embodiment 2 of the present invention;
FIG.13 is a collective view illustrating the relationship between content and metadata in the processing for generating related-content information with respect to non-text based content in Embodiment 2 of the present invention;
FIG.14 is a block diagram illustrating a configuration of a document processing apparatus in well-known example 1; and
FIG.15 is a block diagram illustrating a configuration of a document retrieval apparatus in well-known example 2.

### Best Mode for Carrying Out the Invention

Embodiments of the present invention will be specifically described below with reference to accompanying drawings. The present invention is not limited to the embodiments, and is capable of being carried into practice with various modifications thereof without departing from the scope of the present invention.

### (Embodiment 1)

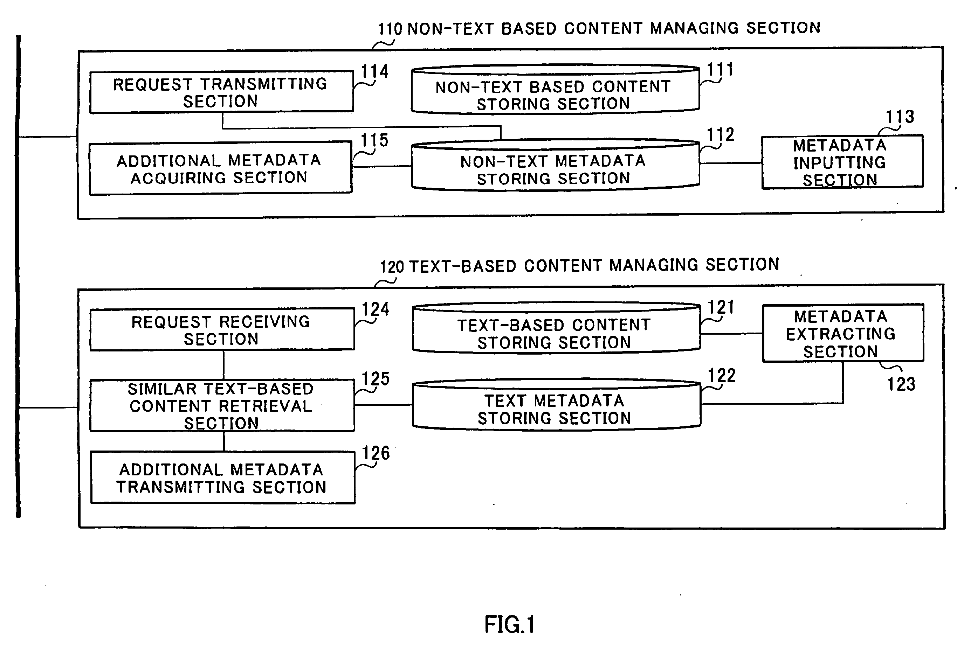

FIG.1 is a block diagram illustrating a configuration of a content managing system in Embodiment 1 of the present invention. The content managing system as illustrated in FIG.1 has non-text based content managing section 110 and text-based content managing section 120.

Non-text based content managing section 110 manages non-text based content such as video and audio and metadata of the content, and has non-text based content storing section 111, non-text metadata storing section 112, metadata inputting section 113, request transmitting section 114 and additional metadata acquiring section 115.

Non-text based content storing section 111 stores non-text based content data.

Non-text metadata storing section 112 stores metadata associated with the content stored in non-text based content storing section 111.

Metadata inputting section 113 is for use inmanually assigning metadata to non-text based content.

Request transmitting section 114 makes an additional metadata request to text-based content managing section 120.

The additional metadata request is a request for metadata to add to the metadata storing in non-text metadata storing section 112.

Additional metadata acquiring section 115 acquires additional metadata provided from text-based content managing section 120 to store in non-text metadata storing section 112.

Text-based content managing section 120 manages text documents and metadata of the documents, and has text-based content storing section 121, text metadata storing section 122, metadata extracting section 123, request receiving section 124, similar text-based content retrieval section 125 and additional metadata transmitting section 126.

Text-based content storing section 121 stores text-based content data.

Text metadata storing section 122 stores metadata associated with the content stored in text-based content storing section 121.

Metadata extracting section 123 automatically extracts metadata from the text data stored in text-based content storing section 121.

Request receiving section 124 receives an additional metadata request from non-text based content managing section 110.

Similar text-based content retrieval section 125 retrieves text-based content similar to non-text based content for which an additional metadata request is made, and acquires metadata assigned to the similar text-based content.

Additional metadata transmitting section 126 transmits the metadata acquired in similar text-based content retrieval section 126 to non-text based content managing section 110 as additional metadata.

The processing for adding metadata in this embodiment will be described below using specific examples.

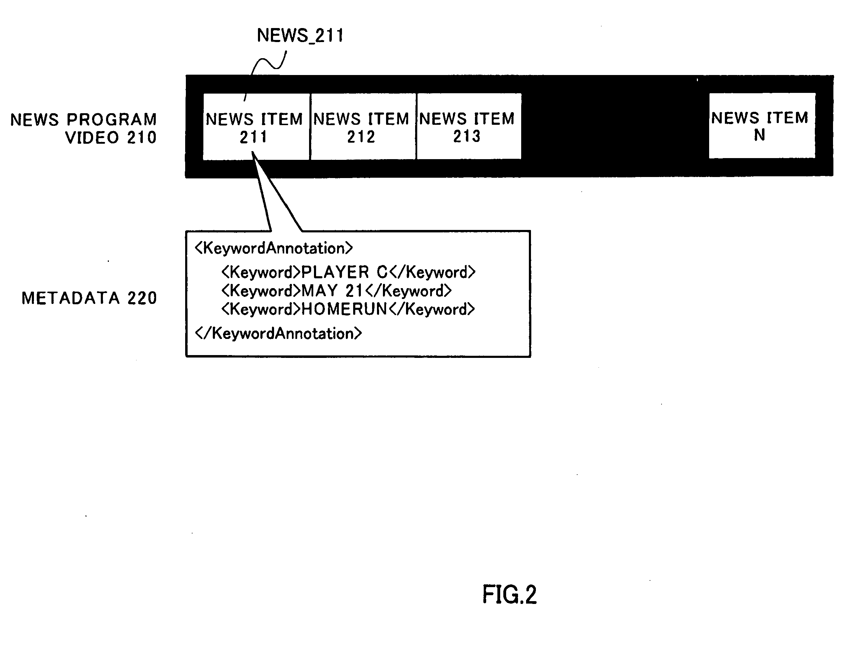

FIG.2 is a view showing an example of video of a news program stored in non-text based content storing section 111 and metadata assigned to a news item of the news program. News program video 210 is divided into a plurality of items according to the subject of the news. It is herein assumed that news item 211 is of news video regarding a baseball game. In this case, metadata 220 is metadata which is related to the subject of the news video and is manually assigned to news item 122 through metadata inputting section 113 and which is stored in non-text based metadata storing section 112. It is further assumed herein that metadata 220 has minimum metadata related to the subject of the news, and that new item 211 is assigned "NEWS_211" as an ID that uniquely indicates the news item content.

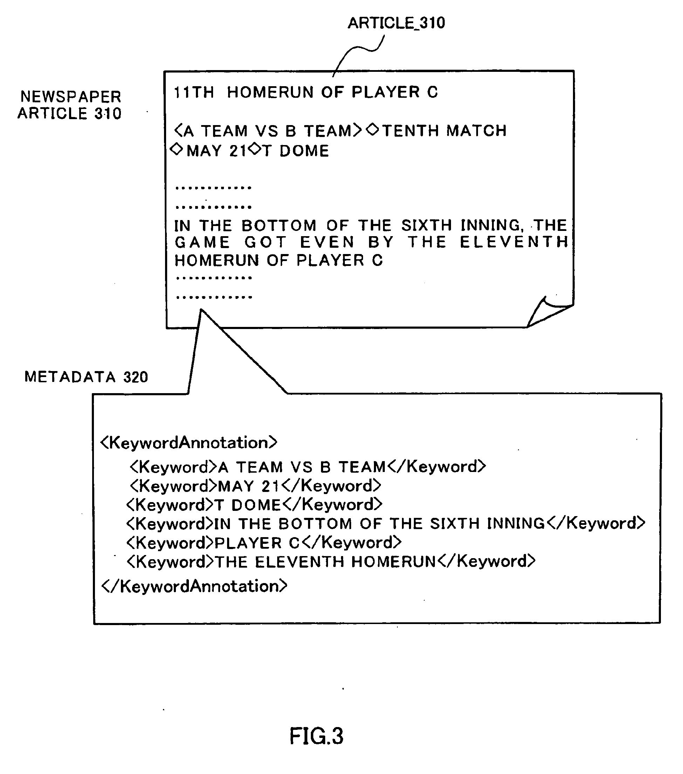

FIG.3 is a view showing an example of a newspaper article stored in text-based content storing section 121 and metadata assigned to the newspaper article. Herein, newspaper article 310 is similar in subject to news item 211 of news program video 210 in FIG.2. At this point, news article 310 is not associated with news item 211 as similar content. Metadata 320 is metadata automatically extracted by metadata extracting section 123, and is stored in text metadata storing section 122. Newspaper article 310 is assigned "ARTICLE_310" as an ID that uniquely indicates the newspaper article content.

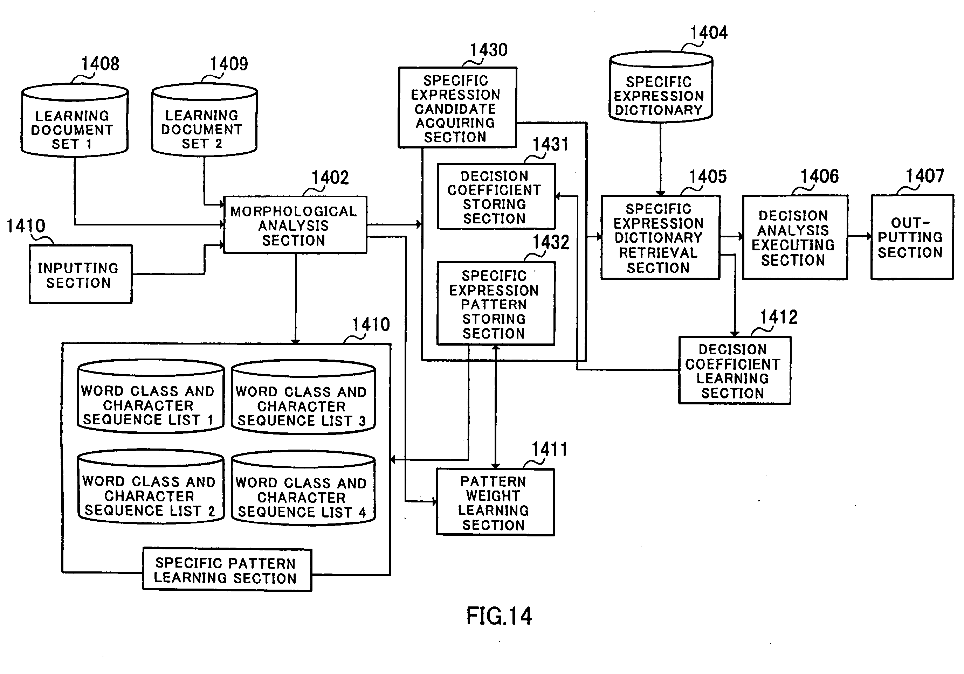

In addition, as an example of a method of extracting metadata from text data includes implementing the method using a method (hereinafter referred to as well-known example 1) described in Japanese Laid-Open Patent Publication No.2001-75959. FIG.14 is a block diagram illustrating a configuration of a document processing apparatus in well-known example 1. The configuration in well-known example 1 is provided with morphological analysis section 1402 that performs morphological analysis on a document input from inputting section 1401, specific expression candidate acquiring section 1430 that acquires a weighted sequence of part of a morphological sequence as a specific expression candidate, specific expression dictionary 1404 that stores a number of specific expressions in advance, specific expression dictionary retrieval section 1405 that outputs a real number of matching between the morphological sequence and an expression in specific expression dictionary 1404 as a retrieval result of specific expression dictionary 1404, decision analysis executing section 1406 which calculates a decision score using as variables a weight assigned to the specific expression candidate and the retrieval result of the specific expression candidate with respect to specific expression dictionary 1404, and eliminates a candidate with the decision score under a predetermined value, and outputting section 1407 that outputs a morphological character sequence with candidates that are not eliminated in decision analysis executing section 1406. The extraction by the dictionary and the extraction by matching are well combined, and it is thereby possible to extract names or the like accurately. Further, various studies have been performed on the method of extracting metadata from text data as described above as well as well-known example 1, and the method is not limited particularly herein. Further, automatically extracted metadata 320 includes not only metadata related to the subject of news but also contextually detailedkeywords,ascompared with metadata 220 that is assigned manually.

In addition, in FIGs.2 and 3, the metadata is described in XML (extensible Markup Language) format, which is one example of description formats of the metadata, and any other description format is available. Furthermore, while metadata includes in description a plurality of keywords, it may be possible to provide each keyword with meaning such as 5W1H and/or to provide metadata with free-text format.

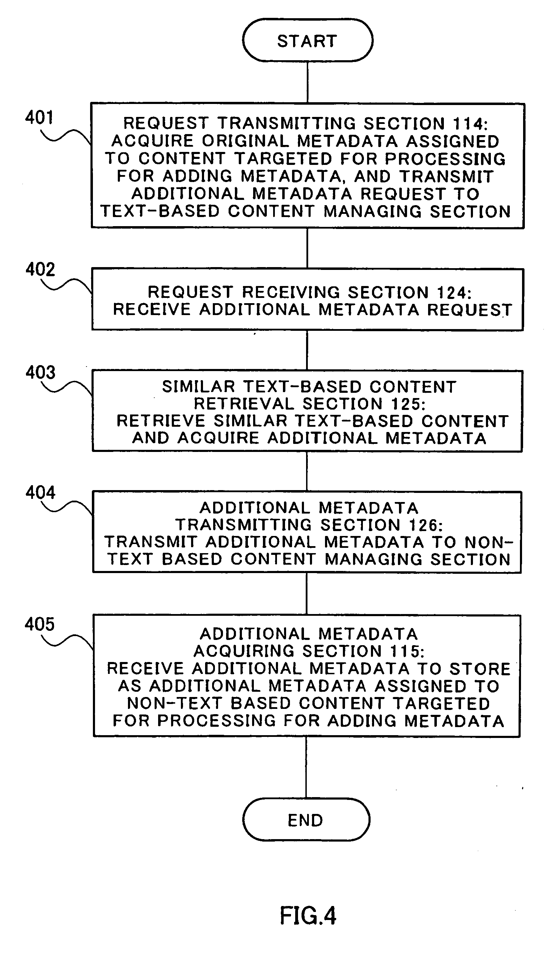

FIG.4 is a flow diagram illustrating a processing flow for adding metadata with respect to non-text based content in Embodiment 1. Hereinafter, for example, the processing for adding metadata with respect to news item 211 as illustrated in FIG.2 will be described with reference to FIG.4.

Step 401: Request transmitting section 114 in non-text based content managing section 110 acquires metadata assigned to non-text based content targeted for the processing for adding metadata from non-text metadata storing section 112, and transmits the acquired metadata (hereinafter referred to as original metadata) together with an additional metadata request to text-based content managing section 120. In this example, the section 114 acquires metadata 220 as the original metadata to transmit together with the additional metadata request.

Step 402: Request receiving section 124 in text-based content managing section 120 receives the additional metadata request (including the original metadata) from non-text based content managing section 110.

Step 403: Similar text-based content retrieval section 125 retrieves similar text-based content using the original metadata included in the additional metadata request, and acquires metadata assigned to the similar text-based content from text metadata storing section 122. When retrieving a plurality of pieces of similar text-based content, metadata is acquired that is assigned to the text-based content with the highest degree of similarity. "Similar" means a case that the overlapping degree of information between the non-text based content and text-based content meets a predetermined criterion.

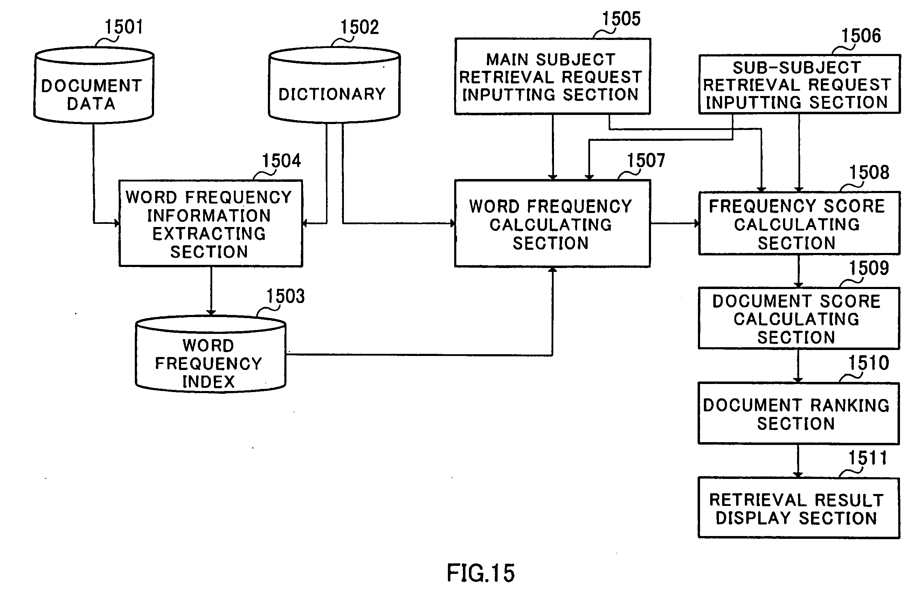

For example, an example of an information retrieval method using a keyword includes implementing the method using a method (hereinafter referred to as well-known example 2) described in Japanese Laid-Open Patent Publication No.H10-49549. FIG.15 is a block diagram illustrating a configuration of a document retrieval apparatus inwell-known example 2. In well-known example 2, frequency score calculating section 1508 calculates a frequency score indicative of a matching degree between a document due to word frequency and retrieval request from the total number of documents, the number of documents with a word appearing, the frequency of appearance of word in the document, and a weighting parameter of the word output from word frequency calculating section 1507, document score calculating section 1509 calculates a document score indicative of a matching degree between the document and retrieval request from the frequency score and assigns priorities, and it is thereby possible to obtain a retrieval result more similar to a retrieval intension. Further, various studies have been performed on the information retrieval method using metadata (keyword), for example, in Tipster project in the USA as described above and SIGIR (see Proceedings of the 23rd Annual International ACM SIGIR Conference on Research and Development in Information Retrieval, July 24-28, 2000) as well as well-known example 2, and the method is not limited particularly herein. In this example, when newspaper article 310 is derived as a result of retrieval of similar text-based content, metadata 320 assigned to newspaper article 310 is acquired.

Step 404: Additional metadata transmitting section 126 transmits the metadata acquired in similar text-based content retrieval section 125 to non-text based content managing section 110 as the additional metadata.

Step 405: Additional metadata acquiring section 115 in non-text based content managing section 110 receives the additional metadata from text-based content managing section 120, and stores the additional metadata in non-text metadata storing section 112 as additional metadata assigned to the non-text based content targeted for the processing for adding metadata.

In addition, it may be possible to implement the processing for non-text based content managing section 110 and text-based content managing section 120 as described in steps 401 to 405 by installing a program for executing the aforementioned steps on a computer.

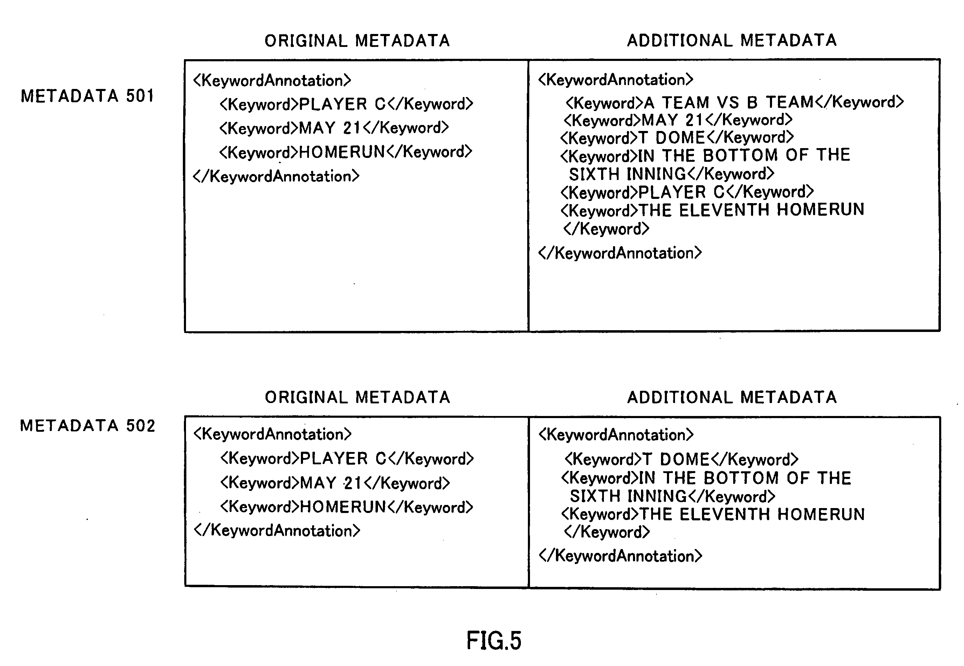

FIG. 5 is a view showing an example of added metadata in the stage where additional metadata acquiring section 115 has finished the processing for adding metadata with respect to news item 211. In the example of metadata 501, the additional metadata received in additional metadata acquiring section 115 is added without being processed. Meanwhile, in the example of metadata 502, additional metadata is added which is obtained by comparing the additional metadata received in additional metadata acquiring section 115 with the original metadata data and eliminating overlapping metadata. Either of aforementioned two kinds of methods is applicable in this Embodiment.

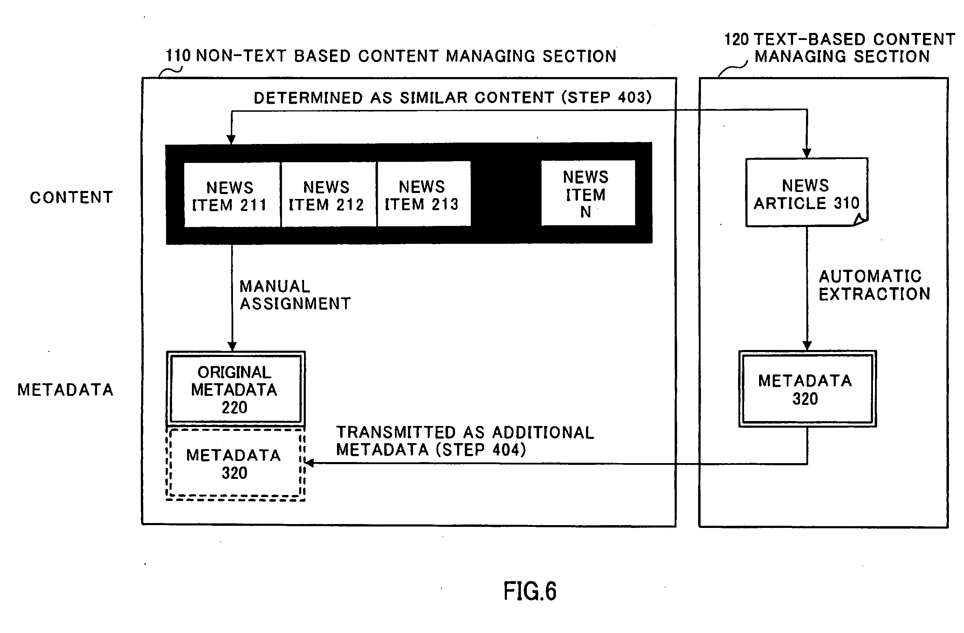

FIG. 6 is a collective view showing the relationship between content and metadata in the processing for adding metadata with respect to the non-text based content in Embodiment 1 of the present invention. This figure indicates that when similar text-based content is required corresponding to the non-text based content targeted for the processing for adding metadata, a variety of metadata extracted corresponding to the similar text-based content is added with respect to the non-text based content targeted for the processing for adding metadata, and thus a variety of metadata is obtained with respect to the non-text based content.

As described above, according to this embodiment, using the metadata manually assigned to non-text based content targeted for the processing for adding metadata, similar text-based content is retrieved, metadata automatically extracted with respect to the similar text-based content is acquired as additional metadata for the non-text based content targeted for the processing for adding metadata, and it is thereby possible to increase the number of items of metadata for the non-text based content from the limited number of items of metadata manually assigned.

Further, thus obtaining a variety of metadata for the content results in a secondary effect that the repeatability of the content is increased in retrieval of non-text based content using the metadata.

In addition, while this Embodiment describes about newspaper articles of only text as illustrated in FIG.3 as an example of text-based content, it may be possible to use documents in HTML format including a figure and/or photograph.

Further, in this Embodiment it may be possible to implement non-text based content managing section 110 and text-based content managing section 120 as a single content managing apparatus with the functions of both sections existing on the same computer, or as a content managing system where the two sections exist on respective separate computers and are connected via an information transmittable network.

Furthermore, while this Embodiment describes the one-to-one construction where a single non-text based content managing section 110 and a single text-based content managing section 120 exist, a one-to-n construction is applicable where a single non-text based content managing section transmits an additional metadata request to a plurality of text-based content managing servers.

FIG.2 in this Embodiment illustrates the case of assigning metadata to news item 211 that is part of the content of news program video 210, as an example. However, either the entire content or part of the content is available as a target for assigning metadata.

Step 403 in FIG.4 in this Embodiment describes the case of acquiring the metadata of the text-based content with the highest degree of similarity when a plurality of similar text-based content is retrieved. In addition to the case, for example, it may be possible to acquire metadata corresponding to a plurality of (for example, ten) pieces of content in descending order of the degree of similarity, and to store in step 405 the metadata of the plurality of pieces of content as additional metadata in non-text based metadata storing section 112.

Further, in the retrieval processing in similar text-based content retrieval section 125 and in the metadata extraction processing in metadata extracting section 123, instead of executing the automatic processing completely, a method is usable of manually checking obtained results to select/discard so as to improve the accuracy.

### (Embodiment 2)

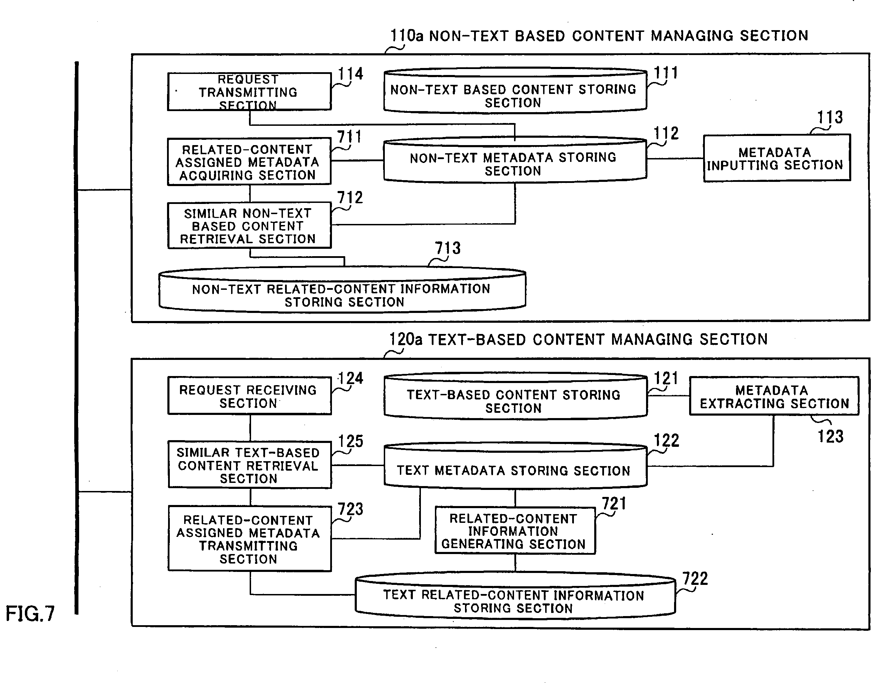

Embodiment 2 of the present invention will be described below. As shown in FIG.7, a content managing system of this Embodiment has the same configuration as in FIG. 1 except eliminating additional metadata acquiring section 115 and additional metadata transmitting section 126 and adding related-content assigned metadata acquiring section 711, similar non-text based content retrieval section 712, non-text related-content information storing section 713, related-content information generating section 721, text related-content information storing section 722 and related-content assigned metadata transmitting section 723.

Related-content assigned metadata acquiring section 711 acquires related-content assigned metadata provided from text-based content managing section 120a.

Similar non-text based content retrieval section 712 generates related-content information on non-text based content based on the related-content assigned metadata.

Non-text related-content information storing section 713 stores the related-content information indicative of the relation between pieces of content stored in non-text based content storing section 111.

Related-content information generating section 721 automatically generates the related-content information indicative of the relation between pieces of content stored in text-based content storing section 121, based on the metadata stored in text-based content storing section 122.

Text related-content information storing section 722 stores the related-content information generated in related-content information generating section 721.

Related-content assigned metadata transmitting section 723 transmits to the non-text based content managing section 110a a group of metadata assigned to a group of related-content corresponding to the similar text-based content acquired in similar text-based content retrieval section 125.

The processing for generating the related-content information in this Embodiment will be descried below using specific examples.

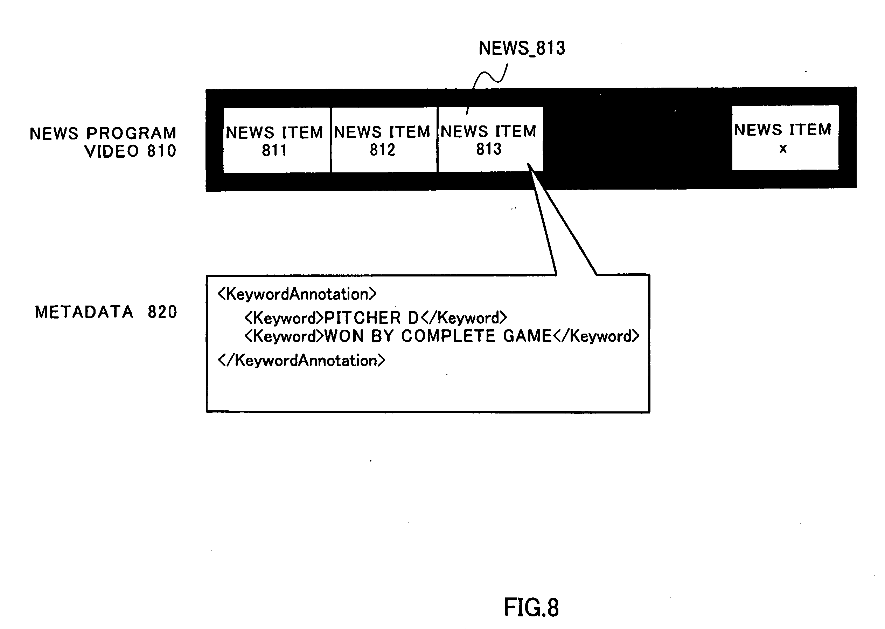

As in FIG.2, FIG.8 shows another example of video of a news program stored in non-text based content storing section 111 and metadata assigned to a news item of the news program. It is also assumed that news item 813 is of news video regarding a baseball game, and that metadata 820 is metadata which is related to the subject of the news video and is manually assigned to news item 813. It is further assumed that new item 813 is assigned "NEWS_813" as an ID that uniquely indicates the news item content.

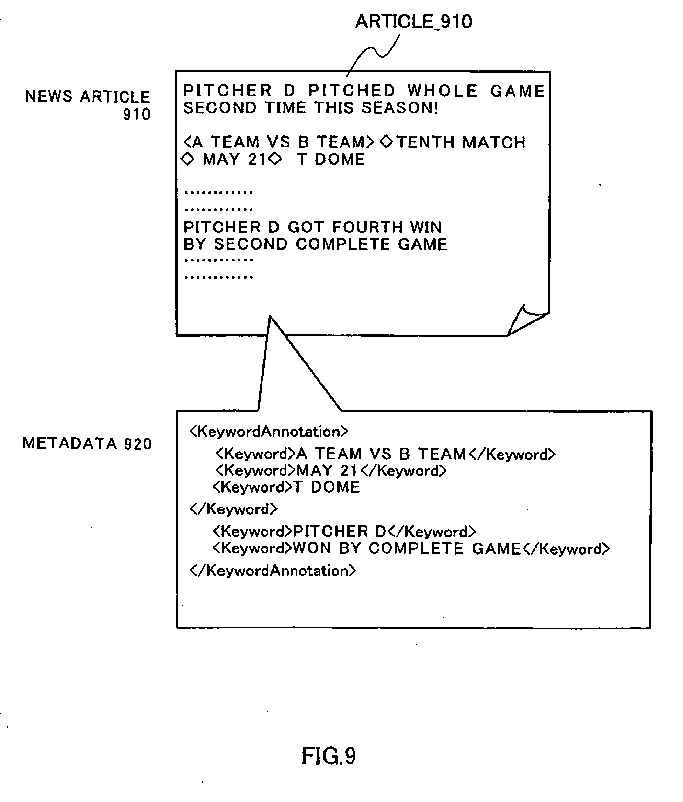

As in FIG.3, FIG. 9 is a view showing another example of a newspaper article stored in text-based content storing section 121 andmetadata assigned to the newspaper article. Herein, newspaper article 910 is similar in subject to news item 813 of news video 810 in FIG.2. Metadata 920 is metadata automatically extracted by metadata extracting section 123, and is stored in text metadata storing section 122. Newspaper article 910 is assigned "ARTICLE_910" as an ID that uniquely indicates the newspaper article content.

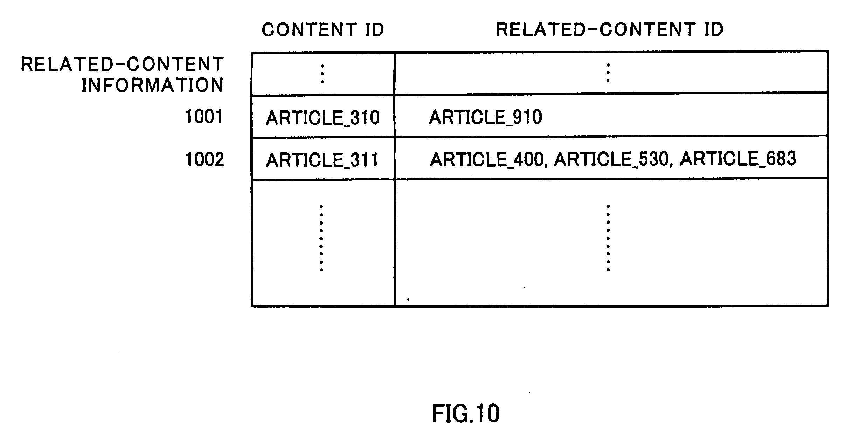

FIG.10 is a view showing an example of related-content information automatically generated by related-content information generating section 721. For example, in the case of related-content information 1001 in FIG.10, as a related article of the content with ID of "ARTICLE_310", there is the content with ID of "ARTICLE_910". In addition, the technique regarding the text processing for detecting the relation between text data is basically a technique similar to the information retrieval method using a keyword to retrieve similar content, as described in step 403 in Embodiment 1. In the specification, "similar" is used in the case where the overlapping degree of information between the non-text based content and text-based content meets a predetermined requirement criterion, while "related" is used in the case where pieces of text-based content or pieces of non-text based content are related to one another in a predetermined method.

Further, in the text-based content, since there are cases that pieces of content have related information (follow-up articles and/or link), it may be possible to generate the related-content information based on such information.

As shown by related-content information 1002 in FIG.10, it is possible to generate the related-content information such that a single piece of content has a plurality of pieces of related-content.

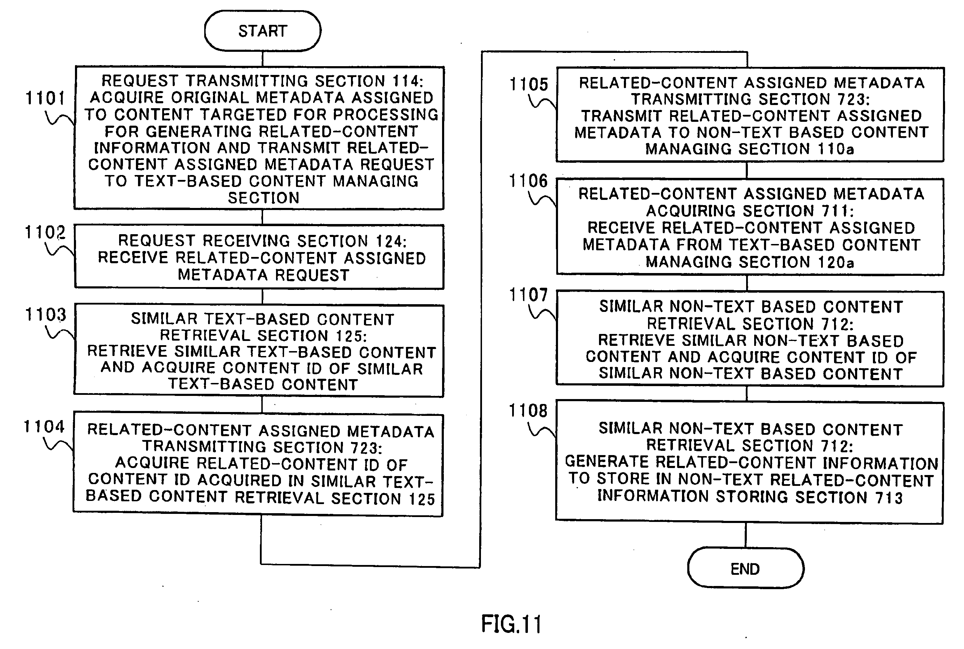

FIG.11 is a flow diagram illustrating a processing flow for generating related-content information with respect to non-text based content in Embodiment 2. Hereinafter, for example, the processing for generating the related-content information with respect to news item 211 as illustrated in FIG.2 will be described with reference to FIG.11.

Step 1101: Request transmitting section 114 in non-text based content managing section 110a acquires metadata assigned to non-text based content targeted for the processing for generating related-content information from non-text metadata storing section 112, and transmits a related-content assigned metadata request to text-based content managing section 120a together with the acquired original metadata. In this example, the section 114 acquires metadata 220 as the original metadata to transmit together with the related-content assigned metadata request.

Herein, the related-content assigned metadata request indicates a request for metadata required to obtain other pieces of non-text based content related to an item of non-text based content data, and specifically indicates a request for metadata assigned to text-based content data similar to the non-text based content so as to obtain other items of non-text based content data related to a piece of non-text based content stored in non-text based content storing section 111.

Step 1102: Request receiving section 124 in text-based content managing section 120a receives the related-content assigned metadata request (including the original metadata) from non-text based content managing section 110a.

Step 1103: Similar text-based content retrieval section 125 retrieves similar text-based content using the original metadata included in the related-content assigned metadata request, and acquires a content ID of the similar text-based content. When retrieving a plurality of pieces of similar text-based content, metadata is acquired that is assigned to the text-based content with the highest degree of. In this example, when newspaper article 310 is derived as a result of retrieval of similar text-based content, content ID "ARTICLE_310" is acquired.

Step 1104: Related-content assigned metadata transmitting section 723 acquires the related-content ID of the content ID acquired in similar text-based content retrieval section 125, referring to the information stored in text related-content information acquiring section 722. In this case, as can be seen from related-content information 1001 in FIG.10, "ARTICLE_910" is acquired.

Step 1105: Related-content assigned metadata transmitting section 723 further acquires the metadata assigned to the text-based content specified by the related-content ID acquired in step 1104 from text metadata storing section 122, and transmits the metadata as the related-content assigned metadata to non-text based content managing section 110a. In this case, the section 723 transmits metadata 920 assigned to newspaper article 910 specified by content ID "ARTICLE_910".

Step 1106: Related-content assigned metadata acquiring section 711 in non-text based content managing section 110a receives the related-content assigned metadata from text-based content managing section 120a.

Step 1107: Similar non-text based content retrieval section 712 retrieves similar non-text based content using the related-content assigned metadata acquired in related-content assigned metadata acquiring section 711, and acquires a content ID of the similar non-text based content. When retrieving a plurality of pieces of similar non-text based content, the content ID of the non-text based content with the highest degree of is acquired. In this example, when newspaper article 813 in FIG.8 is derived as a result of retrieval of similar non-text based content, content ID "NEWS_813" is acquired.

Step 1108 : Similar non-text based content retrieval section 712 generates related-content information using the content ID acquired in step 1107 and the content ID of the content targeted for the processing for generating related-content information, and stores the information in non-text related-content information storing section 713.

In addition, step 1103 in FIG.11 in this Embodiment describes the case of acquiring the metadata assigned to the text-based content with the highest degree of similarity when a plurality of similar text-based content is retrieved. In addition to the case, for example, it may be possible to acquire metadata corresponding to a plurality of (for example, ten) pieces of content in descending order of the degree of similarity.

In step 1104, instead of transmitting metadata assigned to the text-based content specified by content ID "ARTICLE_910", related-content assigned metadata transmitting section 723 may transmit metadata assigned to the text-based content specified by content ID "ARTICLE_310" obtained in step 1103 to non-text based content managing section 110a. In this case, similar non-text based content retrieval section 712 retrieves non-text based content having metadata similar to the metadata assigned to the text-based content specified by content ID "ARTICLE_310".

Further, it may be possible to perform linking retrieval such as retrieval of a content ID related to the content ID "ARTCLE_910" obtained in step 1104.

When a plurality of related-content IDs exists in step 1104, in step 1105 related-content assigned metadata is acquired corresponding to each of the plurality of related-content IDs. In step 1107 similar non-text based content is retrieved for each of a plurality of related-content assigned metadata, and the content ID is acquired for each of the similar non-text based content. In step 1108 the related-content information is generated using a group of a plurality of IDs acquired in step 1107 and the content ID of the content targeted for the processing for generating related-content information.

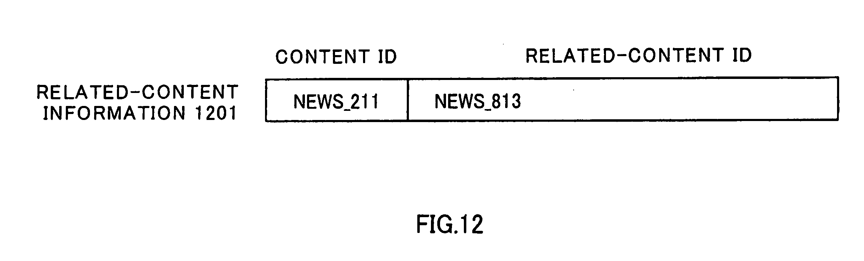

FIG.12 illustrates an example of related-content information stored in non-text related-content information storing section 713 in the stage where the processing is finished of generating related-content information with respect to news item 211 in the above-mentioned example.

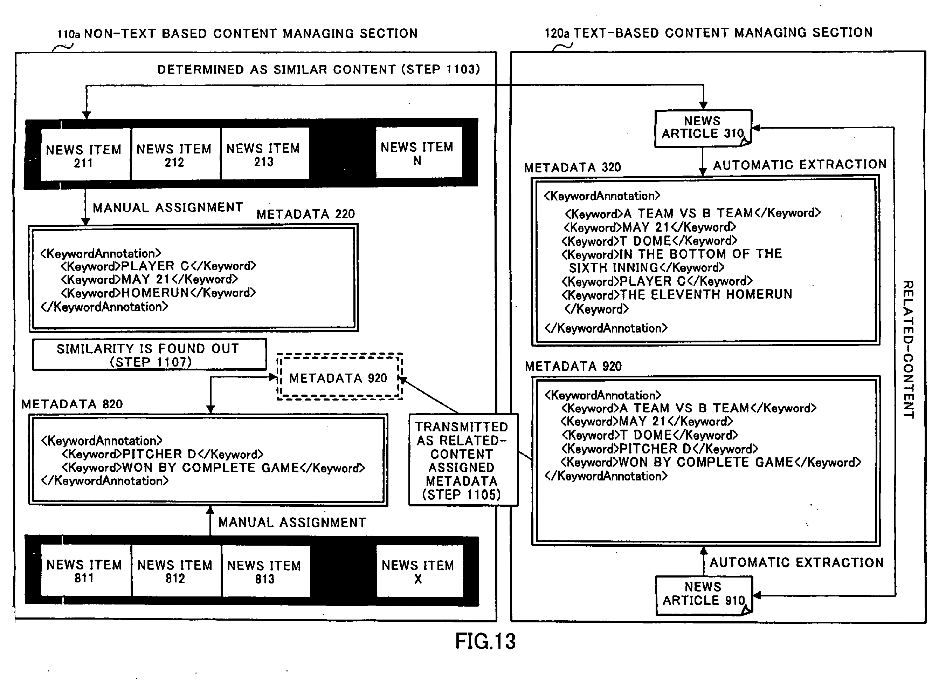

FIG.13 is a collective view illustrating the relationship between content and metadata in the processing for generating related-content information with respect to non-text based content in Embodiment 2. For example, it is not determined that news item 211 and news item 813 are content in relation to each other only by using metadata 220 and 820 manually assigned as illustrated in FIG.13. However, by transferring related information of articles 310 and 910 which are text-based content similar to the two pieces of non-text based content to the non-text based content side, it is derived that the two pieces of non-text based content are related news items regarding the match of "A team vs. B team" carried out on the same day, May 21. In other words, by executing the steps as illustrated in FIG.11, it is derived that news items 211 and 813 are related-content.

As describe above, in this Embodiment, using the metadata manually assigned to non-text based content targeted for the processing for generating related-content information, similar text-based content is retrieved. Then, using the metadata (related-content assigned metadata) automatically extracted with respect to text-based content beforehand associated with the similar text-based content, similar non-text based content is retrieved. It is thereby possible to derive the relation between pieces of non-text based content that is not derived from only the minimummetadata assigned manually.

Further, also in this Embodiment, as in Embodiment 1, it may be possible to implement non-text based content managing section 110a and text-based content managing section 120a as a single content managing apparatus with the functions of both sections existing on the same computer, or as a content managing system where the two sections exist on respective separate computers and are connected via a network.

Furthermore, it may be possible to implement the processing of non-text based content managing section 110a and text-based content managing section 120a described in steps 1101 to 1108 by installing a program for executing the steps on a computer.

As described above, according to the present invention, using the metadata manually assigned to non-text based content targeted for the processing for addingmetadata, similar text-based content is retrieved, metadata automatically extracted with respect to the similar text-based content is acquired as additional metadata for the non-text based content targeted for the processing for adding metadata, and it is thereby possible to increase the number of items of metadata for the non-text based content targeted for the metadata assignment in MPEG-7 from the limited number of items of metadata manually assigned.

Further, thus obtaining a variety of metadata for the content results in a secondary effect that the repeatability of the content is increased in retrieval of non-text based content using the metadata.

Furthermore, using the metadata manually assigned to non-text based content targeted for the processing for generating related-content information, similar text-based content is retrieved. Then, using the metadata (related-content assigned metadata) automatically extracted with respect to the text-based content beforehand associated with the similar text-based content, similar non-text based content is retrieved. It is thereby possible to derive the relation between pieces of non-text based content that is not derived from only the minimum metadata assigned manually.

### Industrial Applicability

The present invention is applicable to a content managing system comprised of a non-text based content managing apparatus that manages non-text based content such as video and audio and metadata of the content and a text-based content managing apparatus that manages text documents and metadata of the documents.

## Claims

1. A content managing system comprising a non-text based content managing apparatus (110) that handles non-text based content, and a text-based content managing apparatus (120) that handles text-based content,
the non-text based content managing apparatus (110) having:
a first transmitting section (114) adapted to transmit to the text-based content managing apparatus (120) an additional metadata request together with original metadata (220) beforehand assigned to a non-text based content (211) targeted for a processing for adding metadata, wherein said additional metadata request is a request for metadata of content to be added to the original metadata (220);
a first receiving section (115) adapted to receive additional metadata of content (320) from the text-based content managing apparatus (120); and
an assigning section adapted to assign the received additional metadata of content (320) to the non-text based content (211) targeted for the processing for adding metadata, and to obtain new metadata (502) of the non-text based content (211) by adding the assigned additional metadata of content to the original metadata (220);
and the text-based content managing apparatus (120) having:
a second receiving section (124) adapted to receive the additional metadata request together with said original metadata (220) from the non-text based content managing apparatus (110);
a retrieval section (125) adapted to retrieve text-based content (310) similar to non-text based content corresponding to the original metadata (220) based on the original metadata (220) included in the received additional metadata request;
an acquiring section (123) adapted to acquire metadata (320) of content beforehand assigned to text-based content (310) as additional metadata of content (320), wherein said beforehand assigned metadata of content (320) is metadata previously extracted from the text data of the text-based content (310); and
a second transmitting section (126) adapted to transmit the acquired additional metadata of content (320) to the non-text based content managing apparatus (110).

2. The content managing system according to claim 1, wherein
when a plurality of similar text-based content is retrieved, the acquiring section (123) acquires a group of metadata beforehand assigned respectively to a predetermined number of text-based content in descending order of a degree of similarity among the plurality of retrieved similar text-based content.

3. The content managing system according to claims 1 or 2, wherein the non-text based content managing apparatus (110) and the text-based content managing apparatus (120) exist on the same computer.

4. The content managing system according to claims 1 or 2, wherein the non-text based content managing apparatus (110) and the text-based content managing apparatus (120) exist on respective different computers and are connected in an information transmittable manner.

5. A non-text based content managing apparatus comprising:
a transmitting section (114) adapted to transmit original metadata (220) beforehand assigned to the non-text based content (211);
**characterized by**
said transmitting section (114) being further adapted to transmit an additional metadata request together with said original metadata (220) beforehand assigned to a non-text based content (211) targeted for a processing for adding metadata, wherein said additional metadata request is a request for metadata of content to be added to the original metadata (220),
said apparatus (110) further comprising:
a receiving section (115) adapted to receive additional metadata of content (320); and
an assigning section adapted to assign the received additional metadata of content (320) to the non-text based content (211) targeted for the processing for adding metadata and to obtain new metadata (502) of the non-text based content (211) by adding the assigned additional metadata of content to the original metadata (220).

6. A text-based content managing apparatus comprising:
a receiving section (124) adapted to receive original metadata (220) beforehand assigned to a non-text based content (211);
a retrieval section (125) adapted to retrieve text-based content (310) similar to the non-text based content (211) corresponding to the original metadata (220) based on the original metadata (220),
**characterized by**
said receiving section (124) being further adapted to receive an additional metadata request together with said original metadata (220), wherein said additional metadata request is a request for metadata of content to be added to the original metadata (220) corresponding to a non-text based content (211) targeted for a processing for adding metadata;
said apparatus (120) further comprising:
an acquiring section adapted to acquire metadata of content (320) beforehand assigned to the retrieved text-based content (310) as additional metadata of content (320), wherein said beforehand assigned metadata of content (320) is metadata previously extracted from the text data of the text-based content (310); and
a transmitting section (126) adapted to transmit the acquired additional metadata of content (320).

7. The text-based content managing apparatus according to claim 6, wherein
when a plurality of similar text-based content is retrieved, the acquiring section (123) acquires a group of metadata beforehand assigned respectively to a predetermined number of text-based content in descending order of a degree of similarity among the plurality of retrieved similar text-based content.

8. A method of adding metadata in a content managing system having a non-text based content managing apparatus (110) that handles non-text based content and a text-based content managing apparatus (120) that handles text-based content, comprising the steps of:
in the non-text based content managing apparatus (110),
transmitting to the text-based content managing apparatus (120) an additional metadata request together with original metadata (220) beforehand assigned to a non-text based content (211) targeted for a processing for adding metadata, wherein said additional metadata request is a request for metadata of content to be added to the original metadata (220);
in the text-based content managing apparatus (120),
receiving the additional metadata request together with said original metadata (220) from the non-text based content managing apparatus (110);
retrieving text-based content (310) similar to the non-text based content (211) corresponding to the original metadata (220) based on the original metadata (220) included in the received additional metadata request;
acquiring metadata (320) of content beforehand assigned to the retrieved text-based content (310) as the additional metadata of content (320), wherein said beforehand assigned metadata of content (320) is metadata previously extracted from the text data of the text-based content (310); and
transmitting the acquired additional metadata of content (320) to the non-text based content managing apparatus (110);
in the non-text based content managing apparatus (110),
receiving additional metadata of content (320) from the text-based content managing apparatus (120);
assigning the received additional metadata of content (320) to the non-text based content (211) targeted for the processing for adding metadata; and
obtaining new metadata (502) of the non-text based content (211) by adding the assigned additional metadata of content to the original metadata (220).

9. The method of adding metadata according to claim 8, wherein
in the acquiring step, when a plurality of similar text-based content is retrieved, the acquiring step acquires a group of metadata beforehand assigned respectively to a predetermined number of text-based content in descending order of a degree of similarity among the plurality of retrieved similar text-based content in the acquiring step.

10. The method of adding metadata according to claims 8 or 9, wherein the assigning step eliminates from the received additional metadata of content (320) a portion of metadata overlapping the original metadata (220).

11. A content managing program for making a computer execute the following steps of the method according to claim 8:
transmitting an additional metadata request together with original metadata (220) beforehand assigned to non-text based content (211) targeted for a processing for adding metadata, wherein said additional metadata request is a request for metadata of content to be added to the original metadata (220);
receiving additional metadata of content (320);
assigning the received additional metadata of content (320) to the non-text based content (211) targeted for the processing for adding metadata; and
obtaining new metadata (502) of the non-text based content (211) by adding the assigned additional metadata of content to the original metadata (220).

12. A content managing program for making a computer execute the following steps of the method according to claim 8:
receiving an additional metadata request together with original metadata (220) beforehand assigned to a non-text based content (211) targeted for a processing for adding metadata;
retrieving text-based content (310) similar to the non-text based content (211) corresponding to the original metadata (220) based on the original metadata (220) included in the received additional metadata request;
acquiring metadata of content (320) beforehand assigned to the retrieved text-based content (310) as additional metadata of content (320), wherein said beforehand assigned metadata of content (320) is metadata previously extracted from the text data of the text-based content (310), and when a plurality of similar text-based content is retrieved, acquiring a group of metadata beforehand assigned respectively to a predetermined number of text-based content in descending order of a degree of similarity among the plurality of retrieved similar text-based content; and
transmitting the acquired additional metadata of content (320).

13. A content managing program for making a computer to execute the steps of the method according to any of claims 8 to 10.

## Patentansprüche

1. System zum Verwalten von Inhalt, das eine Vorrichtung (110) zum Verwalten von nicht-textbasiertem Inhalt, die nicht-textbasierten Inhalt verarbeitet, sowie eine Vorrichtung (120) zum Verwalten von textbasiertem Inhalt umfasst, die textbasierten Inhalt verarbeitet,
wobei die Vorrichtung (110) zum Verwalten von nicht-textbasiertem Inhalt aufweist:
einen ersten Sendeabschnitt (114), der so eingerichtet ist, dass er zu der Vorrichtung (120) zum Verwalten von textbasiertem Inhalt eine Anforderung zusätzlicher Metadaten zusammen mit ursprünglichen Metadaten (220) sendet, die im Voraus einem nicht-textbasierten Inhalt (211) zugewiesen werden, der für eine Verarbeitung zum Hinzufügen von Metadaten bestimmt ist, wobei die Anforderung zusätzlicher Metadaten eine Anforderung von Metadaten von Inhalt ist, die zu den ursprünglichen Metadaten (220) hinzuzufügen sind;
einen ersten Empfangsabschnitt (115), der so eingerichtet ist, dass er zusätzliche Metadaten von Inhalt (320) von der Vorrichtung (120) zum Verwalten von textbasiertem Inhalt empfängt; und
ein Zuweisungsabschnitt, der so eingerichtet ist, dass er die empfangenen zusätzlichen Metadaten von Inhalt (320) zu dem nicht-textbasierten Inhalt (211) zuweist, der für die Verarbeitung zum Hinzufügen von Metadaten bestimmt ist, und neue Metadaten (502) des nicht-textbasierten Inhalts (211) durch Hinzufügen der zugewiesenen zusätzlichen Metadaten von Inhalt zu den ursprünglichen Metadaten (220) gewinnt;
und die Vorrichtung (120) zum Verwalten von textbasiertem Inhalt aufweist:
einen zweiten Empfangsabschnitt (124), der so eingerichtet ist, dass er die Anforderung zusätzlicher Metadaten zusammen mit den ursprünglichen Metadaten (220) von der Vorrichtung (110) zum Verwalten von nicht-textbasiertem Inhalt empfängt;
einen Abrufabschnitt (125), der so eingerichtet ist, dass er textbasierten Inhalt (310) der nicht-textbasiertem Inhalt ähnelt, der den ursprünglichen Metadaten (220) entspricht, auf Basis der ursprünglichen Metadaten (220) abruft, die in der empfangenen Anforderung zusätzlicher Metadaten enthalten sind;
einen Erfassungsabschnitt (123), der so eingerichtet ist, dass er Metadaten (320) von Inhalt, die im Voraus textbasiertem Inhalt (310) zugewiesen werden, als zusätzliche Metadaten von Inhalt (320) erfasst, wobei die im Voraus zugewiesenen Metadaten von Inhalt (320) Metadaten sind, die zuvor aus den Textdaten des textbasierten Inhalts (310) extrahiert wurden; und
einen zweiten Sendeabschnitt (126), der so eingerichtet ist, dass er die erfassten zusätzlichen Metadaten von Inhalt (320) zu der Vorrichtung (110) zum Verwalten von nicht-textbasiertem Inhalt sendet.

2. System zum Verwalten von Inhalt nach Anspruch 1, wobei
wenn eine Vielzahl ähnlicher textbasierter Inhalte abgerufen wird, der Erfassungsabschnitt (123) eine Gruppe von Metadaten erfasst, die im Voraus jeweils einer vorgegebenen Anzahl textbasierter Inhalte in absteigender Reihenfolge eines Grades von Ähnlichkeit zwischen der Vielzahl abgerufener ähnlicher textbasierter Inhalte zugewiesen wurden.

3. System zum Verwalten von Inhalten nach Anspruch 1 oder 2, wobei die Vorrichtung (110) zum Verwalten von nicht-textbasiertem Inhalt und die Vorrichtung (120) zum Verwalten von textbasiertem Inhalt auf dem gleichen Computer vorhanden sind.

4. System zum Verwalten von Inhalt nach Anspruch 1 oder 2, wobei die Vorrichtung (110) zum Verwalten von nicht-textbasiertem Inhalt und die Vorrichtung (120) zum Verwalten von textbasiertem Inhalt auf jeweils verschiedenen Computern vorhanden sind und so verbunden sind, dass Informationen übertragen werden können.

5. Vorrichtung zum Verwalten von nicht-textbasiertem Inhalt, die umfasst:
einen Sendeabschnitt (114), der so eingerichtet ist, dass er ursprüngliche Metadaten (220) sendet, die im Voraus dem nicht-textbasierten Inhalt (211) zugewiesen werden;
**dadurch gekennzeichnet, dass**
der Sendeabschnitt (114) des Weiteren so eingerichtet ist, dass er eine Anforderung zusätzlicher Metadaten zusammen mit den ursprünglichen Metadaten (220) sendet, die im Voraus einem nicht-textbasierten Inhalt (211) zugewiesen werden, der für eine Verarbeitung zum Hinzufügen von Metadaten bestimmt ist, wobei die Anforderung zusätzlicher Metadaten eine Anforderung von Metadaten von Inhalt ist, die zu den ursprünglichen Metadaten (220) hinzuzufügen sind,
wobei die Vorrichtung (110) des Weiteren umfasst:
einen Empfangsabschnitt (115), der so eingerichtet ist, dass er zusätzliche Metadaten von Inhalt (320) empfängt; und
einen Zuweisungsabschnitt, der so eingerichtet ist, dass er die empfangenen zusätzlichen Metadaten von Inhalt (320) zu dem nicht-textbasierten Inhalt (211) zuweist, der für die Verarbeitung zum Hinzufügen von Metadaten bestimmt ist, und neue Metadaten (502) des nicht-textbasierten Inhalts (211) gewinnt, indem er die zugewiesenen zusätzlichen Metadaten von Inhalt zu den ursprünglichen Metadaten (220) hinzufügt.

6. Vorrichtung zum Verwalten von textbasiertem Inhalt, die umfasst:
einen Empfangsabschnitt (124), der so eingerichtet ist, dass er ursprüngliche Metadaten (220) empfängt, die im Voraus einem nicht-textbasierten Inhalt (211) zugewiesen werden;
einen Abrufabschnitt (125), der so eingerichtet ist, dass er textbasierten Inhalt (310), der dem nicht-textbasierten Inhalt (211) ähnelt, der den ursprünglichen Metadaten (220) entspricht, auf Basis der ursprünglichen Metadaten (220) abruft,
**dadurch gekennzeichnet, dass**
der Empfangsabschnitt (124) des Weiteren so eingerichtet ist, dass er eine Anforderung zusätzlicher Metadaten zusammen mit den ursprünglichen Metadaten (220) empfängt, wobei die Anforderung zusätzlicher Metadaten eine Anforderung von Metadaten von Inhalt ist, die zu den ursprünglichen Metadaten (220) hinzuzufügen sind, die einem nicht-textbasierten Inhalt (211) entsprechen, der für eine Verarbeitung zum Hinzufügen von Metadaten bestimmt ist;
wobei die Vorrichtung (120) des Weiteren umfasst:
einen Erfassungsabschnitt, der so eingerichtet ist, dass er Metadaten von Inhalt (310), die dem abgerufenen textbasierten Inhalt (310) im Voraus zugewiesen werden, als zusätzliche Metadaten von Inhalt (320) erfasst, wobei die im Voraus zugewiesenen Metadaten von Inhalt (320) Metadaten sind, die zuvor aus den Textdaten des textbasierten Inhalts (310) extrahiert wurden; und
einen Sendeabschnitt (126), der so eingerichtet ist, dass er die erfassten zusätzlichen Metadaten von Inhalt (320) sendet.

7. Vorrichtung zum Verwalten von textbasiertem Inhalt nach Anspruch 6, wobei wenn eine Vielzahl ähnlicher textbasierter Inhalte abgerufen wird, der Erfassungsabschnitt (123) eine Gruppe von Metadaten erfasst, die im Voraus jeweils einer vorgegebenen Anzahl textbasierter Inhalte in absteigender Reihenfolge eines Grades von Ähnlichkeit zwischen der Vielzahl abgerufener ähnlicher textbasierter Inhalte zugewiesen werden.

8. Verfahren zum Hinzufügen von Metadaten in einem System zum Verwalten von Inhalt, das eine Vorrichtung (110) zum Verwalten von nicht-textbasiertem Inhalt, die nicht-textbasierten Inhalt verarbeitet, und eine Vorrichtung (120) zum Verwalten von textbasiertem Inhalt, die textbasierten Inhalt verarbeitet, aufweist, wobei es die folgenden Schritte umfasst:
in der Vorrichtung (110) zum Verwalten von nicht-textbasiertem Inhalt:
Senden einer Anforderung zusätzlicher Metadaten zusammen mit ursprünglichen Metadaten (220), die im Voraus einem nicht-textbasierten Inhalt (211) zugewiesen werden, der für eine Verarbeitung zum Hinzufügen von Metadaten bestimmt ist, zu der Vorrichtung (120) zum Verwalten von textbasiertem Inhalt, wobei die Anforderung zusätzlicher Metadaten eine Anforderung von Metadaten von Inhalt ist, die zu den ursprünglichen Metadaten (220) hinzuzufügen sind;
in der Vorrichtung (120) zum Verwalten von textbasiertem Inhalt:
Empfangen der Anforderung zusätzlicher Metadaten zusammen mit den ursprünglichen Metadaten (220) von der Vorrichtung (110) zum Verwalten von nicht-textbasiertem Inhalt;
Abrufen von textbasiertem Inhalt (310), der dem nicht-textbasierten Inhalt (211) ähnelt, der den ursprünglichen Metadaten (220) entspricht, auf Basis der ursprünglichen Metadaten (220), die in der empfangenen Anforderung zusätzlicher Metadaten enthalten sind;
Erfassen von Metadaten (320) von Inhalt, die im Voraus dem abgerufenen textbasierten Inhalt (310) zugewiesen werden, als die zusätzlichen Metadaten von Inhalt (320), wobei die im Voraus zugewiesenen Metadaten von Inhalt (320) Metadaten sind, die zuvor aus den Textdaten des textbasierten Inhalts (310) extrahiert wurden; und
Senden der erfassten zusätzlichen Metadaten von Inhalt (320) zu der Vorrichtung (110) zum Verwalten von nicht-textbasiertem Inhalt;
in der Vorrichtung (110) zum Verwalten von nicht-textbasiertem Inhalt,
Empfangen zusätzlicher Metadaten von Inhalt (320) von der Vorrichtung (120) zum Verwalten von textbasiertem Inhalt;
Zuweisen der empfangenen zusätzlichen Metadaten von Inhalt (320) zu dem nicht-textbasierten Inhalt (211), der für die Verarbeitung zum Hinzufügen von Metadaten bestimmt ist; und
Gewinnen neuer Metadaten (502) des nicht-textbasierten Inhalts (211) durch Hinzufügen der zugewiesenen zusätzlichen Metadaten von Inhalt zu den ursprünglichen Metadaten (220).

9. Verfahren zum Hinzufügen von Metadaten nach Anspruch 8, wobei
in dem Erfassungsschritt, wenn eine Vielzahl ähnlicher textbasierter Inhalte abgerufen wird, der Erfassungsschritt eine Gruppe von Metadaten, die im Voraus jeweils einer vorgegebenen Anzahl textbasierter Inhalte in absteigender Reihenfolge eines Grades der Ähnlichkeit zwischen der Vielzahl abgerufener ähnlicher textbasierter Inhalte zugewiesen werden, in dem Erfassungsschritt erfasst.

10. Verfahren zum Hinzufügen von Metadaten nach den Ansprüchen 8 oder 9, wobei der Zuweisungsschritt aus den empfangenen zusätzlichen Metadaten von Inhalt (320) einen Teil von Metadaten eliminiert, die die ursprünglichen Metadaten (220) überlappen.

11. Programm zum Verwalten von Inhalt, das einen Computer veranlasst, die folgenden Schritte des Verfahrens nach Anspruch 8 auszuführen:
Senden einer Anforderung zusätzlicher Metadaten zusammen mit ursprünglichen Metadaten (220), die im Voraus nicht-textbasiertem Inhalt (211) zugewiesen werden, der für eine Verarbeitung zum Hinzufügen von Metadaten bestimmt ist, wobei die Anforderung zusätzlicher Metadaten eine Anforderung von Metadaten von Inhalt ist, die zu den ursprünglichen Metadaten (220) hinzuzufügen sind;
Empfangen zusätzlicher Metadaten von Inhalt (320);
Zuweisen der empfangenen zusätzlichen Metadaten von Inhalt (320) zu dem nicht-textbasierten Inhalt (211), der für die Verarbeitung zum Hinzufügen von Metadaten bestimmt ist; und
Gewinnen neuer Metadaten (502) des nicht-textbasierten Inhalts (211) durch Hinzufügen der zugewiesenen zusätzlichen Metadaten von Inhalt zu den ursprünglichen Metadaten (220).

12. Programm zum Verwalten von Inhalt, das einen Computer veranlasst, die folgenden Schritte des Verfahrens nach Anspruch 8 auszuführen:
Empfangen einer Anforderung zusätzlicher Metadaten zusammen mit ursprünglichen Metadaten (220), die im Voraus einem nicht-textbasierten Inhalt (211) zugewiesen werden, der für eine Verarbeitung zum Hinzufügen von Metadaten bestimmt ist;
Abrufen von textbasiertem Inhalt (310), der dem nicht-textbasierten Inhalt (211) ähnelt, der den ursprünglichen Metadaten (220) entspricht, auf Basis der ursprünglichen Metadaten (220), die in der empfangenen Anforderung zusätzlicher Metadaten enthalten sind;
Erfassen von Metadaten von Inhalt (320), die dem abgerufenen textbasierten Inhalt (310) im Voraus zugewiesen werden, als zusätzliche Metadaten von Inhalt (320), wobei die im Voraus zugewiesenen Metadaten von Inhalt (320) Metadaten sind, die zuvor aus den Textdaten des textbasierten Inhalts (320) extrahiert wurden, und, wenn eine Vielzahl ähnlicher textbasierter Inhalte abgerufen wird, Erfassen einer Gruppe von Metadaten, die im Voraus jeweils einer vorgegebenen Anzahl textbasierter Inhalte in absteigender Reihenfolge eines Grades von Ähnlichkeit zwischen der Vielzahl abgerufener ähnlicher textbasierter Inhalte zugewiesen werden; und
Senden der erfassten zusätzlichen Metadaten von Inhalt (320).

13. Programm zum Verwalten von Inhalt, das einen Computer veranlasst, die Schritte des Verfahrens nach einem der Ansprüche 8 bis 10 auszuführen.

## Revendications

1. Système de gestion de contenu comprenant un dispositif de gestion d'un contenu non basé sur du texte (110) qui manipule un contenu qui n'est pas basé sur un texte, et un dispositif de gestion d'un contenu basé sur du texte (120) qui manipule un contenu basé sur un texte,
le dispositif de gestion d'un contenu non basé sur du texte (110) ayant:
une première section de transmission (114) adaptée pour transmettre au dispositif de gestion de contenu basé sur du texte (120) une demande de métadonnées supplémentaires conjointement avec des métadonnées originales (220) préalablement attribuées à un contenu non basé sur du texte (211) ciblé pour un traitement pour ajouter des métadonnées, où ladite demande de métadonnées supplémentaires est une demande pour des métadonnées de contenu à ajouter aux métadonnées originales (220);
une première section de réception (115) adaptée pour recevoir des métadonnées supplémentaires de contenu (320) à partir du dispositif de gestion de contenu basé sur du texte (120); et
une section d'attribution adaptée pour attribuer les métadonnées supplémentaires reçues de contenu (320) au contenu non basé sur du texte (211) ciblé pour le traitement visant à ajouter des métadonnées, et pour obtenir de nouvelles métadonnées (502) du contenu non basé sur du texte (211) en ajoutant les métadonnées supplémentaires attribuées de contenu aux métadonnées originales (220);
et le dispositif de gestion d'un contenu basé sur du texte (120) ayant:
une deuxième section de réception (124) adaptée pour recevoir la demande de métadonnées supplémentaires conjointement avec lesdites métadonnées originales (220) à partir du dispositif de gestion d'un contenu non basé sur du texte (110);
une section de récupération (125) adaptée pour récupérer un contenu basé sur du texte (310) similaire à un contenu non basé sur du texte correspondant aux métadonnées originales (220) sur la base des métadonnées originales (220) incluses dans la demande de métadonnées supplémentaires reçue;
une section d'acquisition (123) adaptée pour acquérir des métadonnées (320) de contenu préalablement attribuées à un contenu basé sur du texte (310) comme métadonnées supplémentaires de contenu (320), où lesdites métadonnées de contenu (320) préalablement attribuées sont des métadonnées précédemment extraites des données de texte du contenu basé sur du texte (310); et
une deuxième section de transmission (126) adaptée pour transmettre les métadonnées supplémentaires acquises de contenu (320) au dispositif de gestion d'un contenu non basé sur du texte (110).

2. Système de gestion de contenu selon la revendication 1, dans lequel
lorsqu'une pluralité de contenus basés sur du texte similaires est récupérée, la section d'acquisition (123) acquiert un groupe de métadonnées préalablement attribuées respectivement à un nombre prédéterminé de contenus basés sur du texte dans un ordre descendant d'un degré de similarité parmi la pluralité de contenus basés sur du texte similaires récupérés.

3. Système de gestion de contenu selon la revendication 1 ou 2, dans lequel le dispositif de gestion d'un contenu non basé sur du texte (110) et le dispositif de gestion d'un contenu basé sur du texte (120) se trouvent sur le même ordinateur.

4. Système de gestion de contenu selon la revendication 1 ou 2, dans lequel le dispositif de gestion d'un contenu non basé sur du texte (110) et le dispositif de gestion d'un contenu basé sur du texte (120) se trouvent sur des ordinateurs différents respectifs et sont connectés d'une manière permettant la transmission d'informations.

5. Dispositif de gestion d'un contenu non basé sur du texte comprenant:
une section de transmission (114) adaptée pour transmettre des métadonnées originales (220) préalablement attribuées au contenu non basé sur du texte (211);
**caractérisé en ce que**
ladite section de transmission (114) étant en plus adaptée pour transmettre une demande de métadonnées supplémentaires conjointement avec lesdites métadonnées originales (220) préalablement attribuées à un contenu non basé sur du texte (211) ciblé pour un traitement visant à ajouter des métadonnées, où ladite demande de métadonnées supplémentaires est une demande pour des métadonnées de contenu à ajouter aux métadonnées originales (220),
ledit dispositif (110) comprenant en plus:
une section de réception (115) adaptée pour recevoir des métadonnées supplémentaires de contenu (320); et
une section d'attribution adaptée pour attribuer les métadonnées supplémentaires reçues de contenu (320) au contenu non basé sur du texte (211) ciblé pour le traitement visant à ajouter des métadonnées et pour obtenir de nouvelles métadonnées (502) du contenu non basé sur du texte (211) en ajoutant les métadonnées supplémentaires attribuées de contenu aux métadonnées originales (220).

6. Dispositif de gestion d'un contenu basé sur du texte comprenant:
une section de réception (124) adaptée pour recevoir des métadonnées originales (220) préalablement attribuées à un contenu non basé sur du texte (211);
une section de récupération (125) adaptée pour récupérer un contenu basé sur du texte (310) similaire au contenu non basé sur du texte (211) correspondant aux métadonnées originales (220) sur la base des métadonnées originales (220),
**caractérisé en ce que**
ladite section de réception (124) étant en plus adaptée pour recevoir une demande de métadonnées supplémentaires conjointement avec lesdites métadonnées originales (220), où ladite demande de métadonnées supplémentaires est une demande pour des métadonnées de contenu à ajouter aux métadonnées originales (220) correspondant à un contenu non basé sur du texte (211) ciblé pour un traitement visant à ajouter des métadonnées;
ledit dispositif (120) comprenant en plus:
une section d'acquisition adaptée pour acquérir des métadonnées de contenu (320) préalablement attribuées au contenu basé sur du texte récupéré (310) comme métadonnées supplémentaires de contenu (320), où lesdites métadonnées préalablement attribuées de contenu (320) sont des métadonnées précédemment extraites des données de texte du contenu basé sur du texte (310); et
une section de transmission (126) adaptée pour transmettre les métadonnées supplémentaires acquises de contenu (320).

7. Dispositif de gestion d'un contenu basé sur du texte selon la revendication 6, dans lequel
lorsqu'une pluralité de contenus basés sur du texte similaires est récupérée, la section d'acquisition (123) acquiert un groupe de métadonnées préalablement attribuées respectivement à un nombre prédéterminé de contenus basés sur du texte dans un ordre descendant d'un degré de similarité parmi la pluralité de contenus basés sur du texte similaires récupérés.

8. Procédé d'ajout de métadonnées dans un système de gestion de contenu ayant un dispositif de gestion d'un contenu non basé sur du texte (110) qui traite un contenu non basé sur du texte et un dispositif de gestion d'un contenu basé sur du texte (120) qui traite un contenu basé sur du texte, comprenant les étapes consistant à:
dans le dispositif de gestion d'un contenu non basé sur du texte (110),
transmettre au dispositif de gestion d'un contenu basé sur du texte (120) une demande de métadonnées supplémentaires conjointement avec des métadonnées originales (220) préalablement attribuées à un contenu non basé sur du texte (211) ciblé pour un traitement visant à ajouter des métadonnées, où ladite demande de métadonnées supplémentaires est une demande pour des métadonnées de contenu à ajouter aux métadonnées originales (220);
dans le dispositif de gestion d'un contenu basé sur du texte (120),
recevoir la demande de métadonnées supplémentaires conjointement avec lesdites métadonnées originales (220) à partir du dispositif de gestion d'un contenu non basé sur du texte (110);
récupérer un contenu basé sur du texte (310) similaire au contenu non basé sur du texte (211) correspondant aux métadonnées originales (220) sur la base des métadonnées originales (220) incluses dans la demande de métadonnées supplémentaires reçue;
acquérir des métadonnées (320) de contenu préalablement attribuées au contenu basé sur du texte récupéré (310) comme les métadonnées supplémentaires de contenu (320), où les métadonnées préalablement attribuées de contenu (320) sont des métadonnées précédemment extraites des données de texte du contenu basé sur du texte (310); et
transmettre les métadonnées supplémentaires acquises de contenu (320) au dispositif de gestion d'un contenu non basé sur du texte (110);
dans le dispositif de gestion d'un contenu non basé sur du texte (110),
recevoir des métadonnées supplémentaires de contenu (320) du dispositif de gestion d'un contenu basé sur du texte (120);
attribuer les métadonnées supplémentaires reçues de contenu (320) au contenu non basé sur du texte (211) ciblé pour le traitement visant à ajouter des métadonnées et;
obtenir de nouvelles métadonnées (502) du contenu non basé sur du texte (211) en ajoutant les métadonnées supplémentaires attribuées de contenu aux métadonnées originales (220).

9. Procédé d'ajout de métadonnées selon la revendication 8, dans lequel
dans l'étape d'acquisition, lorsqu'une pluralité de contenus basés sur du texte similaires est récupérée, l'étape d'acquisition acquiert un groupe de métadonnées préalablement attribuées respectivement à un nombre prédéterminé de contenus basés sur du texte dans un ordre descendant d'un degré de similarité parmi la pluralité de contenus basés sur du texte similaires récupérés dans l'étape d'acquisition.

10. Procédé d'ajout de métadonnées selon la revendication 8 ou 9, dans lequel l'étape d'attribution élimine une portion de métadonnées recoupant les métadonnées originales (220) des métadonnées supplémentaires reçues de contenu (320).

11. Programme de gestion de contenu pour amener un ordinateur à exécuter les étapes suivantes du procédé selon la revendication 8:
transmettre une demande de métadonnées supplémentaires conjointement avec des métadonnées originales (220) préalablement attribuées à un contenu non basé sur du texte (211) ciblé pour un traitement visant à ajouter des métadonnées, où ladite demande de métadonnées supplémentaires est une demande pour des métadonnées de contenu à ajouter aux métadonnées originales (220);
recevoir des métadonnées supplémentaires de contenu (320);
attribuer les métadonnées supplémentaires reçues de contenu (320) au contenu non basé sur du texte (211) ciblé pour le traitement visant à ajouter des métadonnées; et
obtenir de nouvelles métadonnées (502) du contenu non basé sur du texte (211) en ajoutant les métadonnées supplémentaires attribuées de contenu aux métadonnées originales (220).

12. Programme de gestion de contenu pour amener un ordinateur à exécuter les étapes suivantes du procédé selon la revendication 8:
recevoir une demande de métadonnées supplémentaires conjointement avec des métadonnées originales (220) préalablement attribuées à un contenu non basé sur du texte (211) ciblé pour un traitement visant à ajouter des métadonnées;
récupérer un contenu basé sur du texte (310) similaire au contenu non basé sur du texte (211) correspondant aux métadonnées originales (220) sur la base des métadonnées originales (220) incluses dans la demande de métadonnées supplémentaires reçue;
acquérir des métadonnées de contenu (320) préalablement attribuées au contenu basé sur du texte récupéré (310) comme métadonnées supplémentaires de contenu (320), dans lequel lesdites métadonnées préalablement attribuées de contenu (320) sont des métadonnées précédemment extraites des données de texte du contenu basé sur du texte (310), et lorsqu'une pluralité de contenus basés sur du texte similaires est récupérée, acquérir un groupe de métadonnées préalablement attribuées respectivement à un nombre prédéterminé de contenus basés sur du texte dans un ordre descendant d'un degré de similarité parmi la pluralité de contenus basés sur du texte similaires récupérés; et
transmettre les métadonnées supplémentaires acquises de contenu (320).

13. Programme de gestion de contenu pour amener un ordinateur à exécuter les étapes du procédé selon l'une quelconque des revendications 8 à 10.
